# EUROPÄISCHE PATENTSCHRIFT

(11) **EP 2 063 222 B1**
(45) Veröffentlichungstag und Bekanntmachung des Hinweises auf die Patenterteilung: **01.02.2012**
(21) Anmeldenummer: 08105623.6
(22) Anmeldetag: 21.10.2008
(51) Int. Cl.: G01C 15/00

(54) **Rotationslaser mit mehreren Detektoren sowie Rotationslaser-Fernsteuerungs-System**
Rotary laser with multiple detectors and rotary laser remote control system
Laser rotatif avec plusieurs détecteurs et système de télécommande pour laser rotatif

(30) Priorität: 21.11.2007 DE 102007055439
(43) Veröffentlichungstag der Anmeldung: 27.05.2009
(73) Patentinhaber: HILTI Aktiengesellschaft, 9494 Schaan (LI)
(72) Erfinder: Ammann, Manfred, 6923, Lauterach (AT); Winter, Andreas, 6800, Feldkirch (AT); Lukic, Sasha, 9470, Buchs (CH)

(56) Entgegenhaltungen:
- DE-A1- 10 054 627
- DE-A1- 19 716 710
- JP-A- 2003 090 723
- US-A- 3 865 491

## Beschreibung

Die Erfindung bezeichnet einen Rotationslaser zum Aufspannen einer Strahlebene für einen zumindest teilweise umlaufenden Laserstrahl, sowie eine zugeordnete Fernsteuerung zur Steuerung dieses Rotationslasers.

Derartige Rotationslaser werden im Bauhaupt- und Hilfsgewerbe zur Nivellierung bzw. bestimmten Neigung von Flächen, sowie zur Markierung von Befestigungspunkten benutzt. Üblicherweise spannt der im rotierenden Betriebsmode betriebene Rotationslaser eine vollständige Ebene auf, in welcher der Laserstrahl gleichmässig rotierend und mit konstanter Strahlintensität umläuft.

Nach der DE10054627 ist ein Rotationslaser mit einem zugeordneten aktiven Strahlfänger bekannt, welcher zudem eine vom Nutzer direkt steuerbare Fernbedienung für den Rotationslaser aufweist, mit welcher sich dieser mittels Tasten manuell gesteuert in zwei Ebenen neigen lässt.

Nach der US3865491 ist ein Rotationslaser mit einem Infrarotempfänger bekannt, durch welchen der Laserstrahl exakt auf die (innerhalb der Rotationsebene projizierte) Position eines aktiven Strahlfängers mit einem Infrarotsender ausrichtbar ist.

Nach der DE19716710 ist ein Rotationslaser mit einem aktiven Strahlfänger bekannt, der einen Infrarotsender beinhaltet, welcher genau dann ein Infrarotsignal aussendet, wenn der Laserstrahl von dem Strahlfänger detektiert wurde. Somit ist das Infrarotsignal mit dem Auftreffen des Laserstrahls auf den aktiven Strahlfänger zeitlich korreliert, wodurch indirekt über die Zeit die Richtung zum Strahlfänger durch das Rechenmittel im Rotationslaser bestimmbar ist. Das reflektierte Infrarotsignal wird von einem Infrarotempfänger im Rotationslaser detektiert, worauf dieser die Rotation unterbricht und in einem "Scanning" Betriebsmodus den Laserstrahl im Winkelsektor um die Position des Strahlfänger hin- und herbewegt, um die Sichtbarkeit des Laserstrahls zu verbessern. Zur Steuerung des Rotationslasers muss aber der Strahlfänger notwendig in den rotierenden Laserstrahl gehalten werden, der jedoch bei ungünstigen Lichtverhältnissen schlecht sichtbar ist.

Nach der JP2003090723 ist ein Rotationslaser bekannt, der eine um eine Drehachse rotierende Laserstrahleinheit mit einem Laserstrahlumlenkmittel, das den Laserstrahl in eine Strahlebene umlenkt, aufweist. Der Rotationslaser wirkt mit einem Sender zur Aussendung eines Infrarotsignals zusammen und ist von einem Rechenmittel steuerbar von einem Rotationsmodus in einen Scanning Betriebsmodus umschaltbar. Der Rotationslaser weist mehrere Detektoren auf, die um die Drehachse umlaufend verteilt und radial beabstandet angeordnet sind und die mit dem Rechenmittel verbunden sind. Die Detektoren sind auf einer Leiterplatine angeordnet und im Gehäuse des Rotationslasers sind ein oder mehrere Eintrittsfenster vorgesehen, die das Infrarotsignal passieren muss, bevor es auf die Detektoren auftreffen kann. Zur Steuerung des Rotationslasers muss das Infrarotsignal des Senders auf das Eintrittsfenster im Gehäuse ausgerichtet werden.

Die Aufgabe der Erfindung besteht in der Realisierung einer robusteren Steuermöglichkeit eines Rotationslasers zum Wechsel aus dem rotierenden in den scannenden Betriebsmodus mit einer höheren Richtungsgenauigkeit.

Die Aufgabe wird im Wesentlichen durch die Merkmale des Anspruchs 1 gelöst. Vorteilhafte Weiterbildungen ergeben sich aus den Unteransprüchen.

So weist ein Rotationslaser eine zur Aussendung zumindest eines in einer Strahlebene um eine Drehachse rotierenden Laserstrahls geeignete Laserstrahleinheit auf, welche ein Laserstrahlumlenkmittel, das den Laserstrahl in die Strahlebene umlenkt, umfasst und von einem Rechenmittel steuerbar von einem in der Strahlebene umlaufend rotierenden Betriebsmodus in einen in der Strahlebene innerhalb eines Winkelsektors scannenden Betriebsmodus umschaltbar ist, sowie mit einem zumindest innerhalb der Strahlebene amplitudensensiblen Detektor, der mit dem Rechenmittel verbunden ist, wobei mehrere derartige Detektoren um die Drehachse umlaufend verteilt und radial beabstandet angeordnet sind. Die rotierende Laserstrahleinheit bildet zusätzlich zu dem Laserstrahlumlenkmittel zumindest ein Umlenkmittel für ein Signal eines Senders aus, wobei das Umlenkmittel senkrecht zur Strahlebene konvex ausgebildet ist.

Durch die mehreren, um eine Drehachse umlaufend verteilten Detektoren ist die Richtung eines strahlenden Senders (Infrarot, Ultraschall, Funk) direkt ermittelbar, bspw. durch die Amplitudenverteilung an den einzelnen, umlaufend verteilten Detektoren. So kann das Rechenmittel die Richtung eines strahlenden Senders auch außerhalb der Strahlebene ermitteln und in den scannenden Betriebsmodus wechseln, der um die Projektion des Senders in die Strahlebene hin- und herschwenkt. Dadurch, dass die Detektoren radial beabstandet um die Drehachse der rotierenden Laserstrahleinheit angeordnet sind, können die selbst nicht rotierenden Detektoren direkt (also ohne Schleifringüberträger) mit dem Rechenmittel verbunden werden. Durch das zusätzliche Umlenkmittel, das senkrecht zur Strahlebene konvex ausgebildet ist, wird der zur Strahlebene senkrechte Detektionssektor der Detektoren erweitert, vorteilhaft auf einen Detektionssektor von zumindest 30°. Dabei sind vorteilhaft beidseitig zum Laserstrahlumlenkmittel zwei Umlenkmittel vorgesehen.

Vorteilhaft ist das Signal ein Infrarotsignal, der Detektor ein Infrarotdetektor und der Sender ein Infrarotsender, wodurch die Richtungsinformation hochgenau detektierbar ist, da ein Infrarotsignal kaum durch Beugung abgelenkt wird.

Vorteilhaft weisen die amplitudensensiblen Detektoren je einen Amplitudenfilter auf, der die Amplitude der Hüllkurve eines üblicherweise hochfrequenten Signals ermittelt, wodurch die Amplitudeninformation störungsfrei demoduliert ist.

Vorteilhaft beinhaltet das Rechenmittel eine Maximumamplitudeninterpolation, welche aus den diskreten detektierten Amplituden der einzelnen Detektoren die Interpolationsrichtung der Maximumamplitude interpoliert, wodurch die Richtung eines strahlenden Senders durch diese interpolationsrichtung ermittelt ist

Vorteilhaft beinhaltet das Rechenmittel eine Maximumamplitudenänderungsinterpolation, welche aus den diskreten detektierten Amplituden der einzelnen Detektoren die beiden Interpolationsrichtungen der beiden Maximumamplitudenänderungen unterschiedlichen Vorzeichens interpoliert, wodurch die Richtung eines strahlenden Senders exakter durch die in positiver Änderungsrichtung liegende Winkelhalblerende zwischen beiden Interpolationsrichtungen ermittelbar ist.

Vorteilhaft besteht in einem Rotationslaser-Fernsteuerungs-System aus einem derartigen Rotationslaser sowie einer zugeordneten Fernsteuerung mit einem Sender und einer manuell betätigbaren Sendetaste zur Aktivierung des Signals, welches zumindest über eine Rotationsperiodendauer des Rotationslasers, weiter vorteilhaft über mehrere Sekunden, mit konstanter Frequenz und Amplitude sendet.

Vorteilhaft weist der Sender einen strahlenden Raumwinkel im Bereich von 10° bis zu 30° auf, weiter vorteilhaft von 17°, wodurch der Nutzer intuitiv die Fernsteuerung zu dem Rotationslaser hin ausrichten muss, um diesen zu steuern, und somit Fehlbedienungen minimiert werden.

Vorteilhaft ist die Fernsteuerung als aktiver Strahlfänger mit einer Stromquelle und einer Photodiodenzeile ausgebildet, wodurch auch bei schlechten Sichtverhältnissen der Laserstrahl exakt erfassbar ist.

Die Erfindung wird bezüglich eines vorteilhaften Ausführungsbeispiels näher erläutert mit
Fig. 1 als Rotationstaser-Fernsteuerungs-System in Seitenansicht
Fig. 2 als Einzelheit des Rotationslasers nach Fig. 1 in Draufsicht
Fig. 3 als elektrisches Verbindungsschema

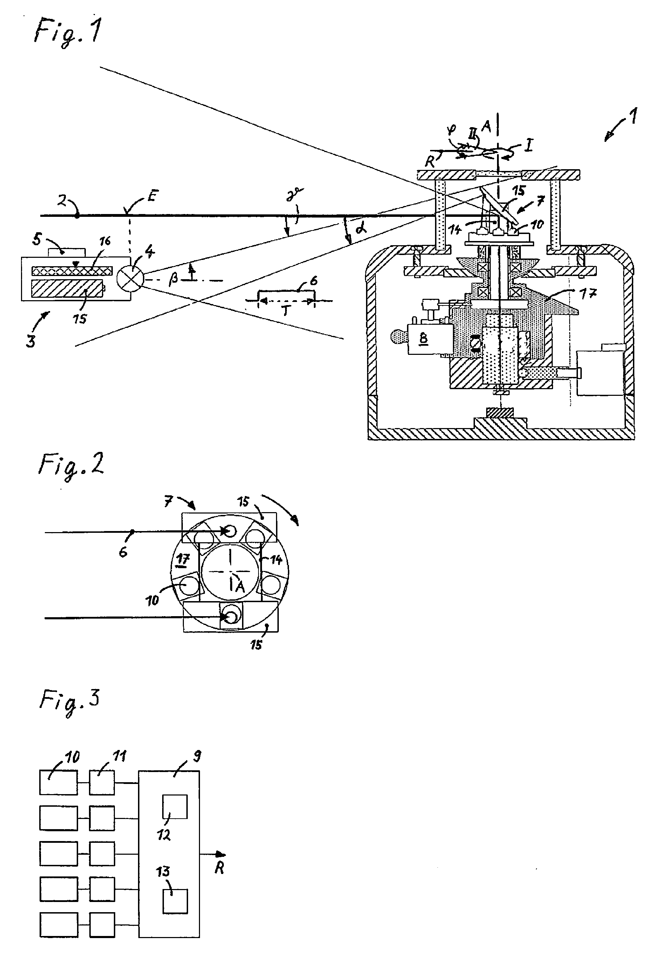

Nach Fig. 1 besteht ein Rotationslaser-Fernsteuerungs-System aus einem Rotationslaser 1, der in einer horizontal nivellierten Strahlebene E einen rotierenden Laserstrahl 2 aussendet, und einer (bezüglich des Rotationslasers 1) im Sichtwinkel [gamma] = 10° ausserhalb der Strahlebene E angeordneten, zugeordneten Fernsteuerung 3 mit einem (Infrarot-)Sender 4, der in einem Raumwinkel von [beta] = 17° sendet. Zudem weist die Fernsteuerung 3 eine manuell betätigbare Sendetaste 5 zur Aktivierung eines (Infrarot-)Signals 6 auf, welches über den Zeitraum T = 2 Sekunden mit konstanter Frequenz und Amplitude ausgesendet wird. Nach dem Empfang des (Infrarot-)Signals 6 durch den Rotationslaser 1 wechselt dieser von einem in der Strahlebene E umlaufend rotierenden Betriebsmodus I in den scannenden Betriebsmode II und wird innerhalb eines (angedeuteten) Winkelsektors [phi] um die Projektion der Fernsteuerung 3 auf die Strahlebene E hin- und hergeschwenkt. Der Rotationslaser 1 weist eine zur Aussendung des in der Strahlebene E rotierenden Laserstrahls 2 geeignete Laserstrahleinheit 7 auf, welche von einem Schrittmotor 8 angetrieben und über diesen von einem Rechenmittel 9 steuerbar um eine Drehachse A drehbar ist. Die rotierende Laserstrahleinheit 7 weist zusätzlich zu einem Laserstrahlumlenkmittel 14 in Form eines Umlenkprismas zwei (Infrarot-)Umlenkmittel 15 in Form von zylinderförmigen Konvexspiegeln aus, die senkrecht zur Strahlebene E konvex für einen Detektionssektor von 2 x [alpha] = 30° ausgebildet und nach Fig. 2 beidseitig zum Laserstrahlumlenkmittel 14 angeordnet sind. Zudem sind mit einer verschwenkbaren Nivelliereinheit 17 verbundene, parallel zur Strahlebene E angeordnete (Infrarot-)Detektoren 10 (Fig. 2) vorhanden. Die zudem als aktiver Strahlfänger ausgebildete Fernsteuerung 3 weist eine Stromquelle 15 und eine Photodiodenzeile 16 auf.

Nach Fig. 2 sind die mit der verschwenkbaren Nivelliereinheit 17 verbundenen fünf amplitudensensiblen (Infrarot-)Detektoren 10 radial beabstandet um die Drehachse A der rotierenden Laserstrahleinheit 7 angeordnet.

Nach Fig. 3 ist jeder (Infrarot-)Detektor 10 über einen Amplitudenfilter 11 mit dem Rechenmittel 9 verbunden. Das Rechenmittel 9 in Form eines Mikrocontrollers beinhaltet eine Maximumamplitudeninterpolation 12, welche aus den diskreten detektierten Amplituden der einzelnen (Infrarot-)Detektoren 10 die Interpolationsrichtung einer Maximumamplitude interpoliert, und eine Maximumamplitudenänderungsinterpolation 13, welche aus den detektierten, bezüglich eines Richtungswinkels in der Strahlebene E (Fig. 1) diskreten, Amplituden der einzelnen (Infrarot-)Detektoren 10 die beiden Interpolationsrichtungen der beiden Maximumamplitudenänderungen unterschiedlichen Vorzeichens interpoliert, daraus die Richtung R zum strahlenden (Infrarot-)Sender 4 (Fig. 1) ermittelt, den rotierenden Betriebsmodus I (Fig. 1) beendet, den Schrittmotor 8 (Fig. 1) derart steuert, dass der Laserstrahl 2 (Fig. 1) innerhalb der Strahlebene E (Fig. 1) zum Sender 4 (Fig. 1) zeigt und dann in den scannenden Betriebsmode II (Fig. 1) wechselt.

## Patentansprüche

1. Rotationslaser mit einer zur Aussendung zumindest eines in einer Strahlebene (E) um eine Drehachse (A) rotierenden Laserstrahls (2) geeigneten Laserstrahleinheit (7), welche ein Laserstrahlumlenkmittel (14), das den Laserstrahl (2) in die Strahlebene (E) umlenkt, umfasst und von einem Rechenmittel (9) steuerbar von einem in der Strahlebene (E) umlaufend rotierenden Betriebsmodus (I) in einen in der Strahlebene (E) innerhalb eines Winkelsektors ([phi]) scannenden Betriebsmodus (II) umschaltbar ist, sowie mit einem zumindest innerhalb der Strahlebene (E) amplitudensensiblen Detektor (10), der mit dem Rechenmittel (9) verbunden ist, wobei mehrere derartige Detektoren (10) um die Drehachse (A) umlaufend verteilt und radial beabstandet angeordnet sind, **dadurch gekennzeichnet, dass** die rotierende Laserstrahleinheit (7) zusätzlich zu dem Laserstrahlumlenkmittel (14) zumindest ein Umlenkmittel (15) für ein Signal (6) eines Senders (4) ausbildet, wobei das Umlenkmittel (15) senkrecht zur Strahlebene (E) konvex ausgebildet ist.

2. Rotationslasers nach Anspruch 1, **dadurch gekennzeichnet, dass** der Detektor (10) ein Infrarotdetektor ist.

3. Rotationslaser nach Anspruch 1 oder 2, **dadurch gekennzeichnet, dass** die amplitudensensiblen Detektoren (10) jeweils einen Amplitudenfilter (11) aufweisen, der die Amplitude der Hüllkurve eines üblicherweise hochfrequenten Signals (6) ermittelt.

4. Rotationslaser nach einem der Ansprüche 1 bis 3, **dadurch gekennzeichnet, dass** das Rechenmittel (9) eine Maximumamplitudeninterpolation (12) beinhaltet, welche aus den diskreten detektierten Amplituden der einzelnen Detektoren (10) die Interpolationsrichtung der Maximumamplitude interpoliert.

5. Rotationslaser nach einem der Ansprüche 1 bis 4, **dadurch gekennzeichnet, dass** das Rechenmittel (9) eine Maximumamplitudenänderungsinterpolation (13) beinhaltet, welche aus den diskreten detektierten Amplituden der einzelnen Detektoren (10) die beiden Interpolationsrichtungen der beiden Maximumänderungsamplituden unterschiedlichen Vorzeichens interpoliert.

6. Rotationslaser-Femsteuerungs-System aus einem Rotationslaser (1) nach einem der Ansprüche 1 bis 5, und einer zugeordneten Fernsteuerung (3) mit einem Sender (4) und einer manuell betätigbaren Sendetaste (5) zur Aktivierung des Signals (6), **dadurch gekennzeichnet, dass** das Signal (6) zumindest über eine Rotationsperiodendauer (T) des Rotationslaser (1) eine konstante Frequenz und Amplitude aufweist.

7. Rotationslaser-Fernsteuerungs-System nach Anspruch 6, **dadurch gekennzeichnet, dass** der Sender (4) einen strahlenden Raumwinkel ([beta]) im Bereich von 10° bis zu 30° aufweist.

8. Rotationslaser-Fernsteuerungs-System nach Anspruch 6 oder 7, **dadurch gekennzeichnet, dass** die Fernsteuerung als aktiver Strahlfänger mit einer Stromquelle und einer Photodiodenzeile ausgebildet ist.

## Claims

1. Rotary laser having a laser beam unit (7) suitable for emitting at least one laser beam (2) rotating in a beam plane (E) about an axis of rotation (A), the laser beam unit (7) including a laser beam deflector means (14) which deflects the laser beam (2) into the beam plane (E) and is controllable by a computing means (9) to be switched from an operating mode (I) of circulating rotation in the beam plane (E) to an operating mode (II) of scanning within an angle sector ([phi]) in the beam plane (E), and having a detector (10) that is amplitude sensitive at least within the beam plane (E) and is connected with the computing means (9), a plurality of such detectors (10) being distributed around the axis of rotation (A) arranged circumferentially spaced from each other, **characterised in that** the rotating laser beam unit (7), in addition to the laser beam deflector means (14), forms at least one deflector means (15) for a signal (6) of a transmitter (4), the deflector means (15) being formed perpendicularly convexly with respect to the beam plane (E).

2. Rotary laser according to claim 1, **characterised in that** the detector (10) is an infra red detector.

3. Rotary laser according to claim 1 or 2, **characterised in that** each of the amplitude sensitive detectors (10) has an amplitude filter (11) which determines the amplitude of the envelope curve of a normally high frequency signal (6).

4. Rotary laser according to one of claims 1 to 3, **characterised in that** the computing means (9) includes a maximum amplitude interpolation (12) which, from the discrete amplitudes detected by the individual detectors (10), interpolates the interpolating direction of the maximum amplitude.

5. Rotary laser according to one of claims 1 to 4, **characterised in that** the computing means (9) includes a maximum amplitude change interpolation (13) which, from the discrete amplitudes detected by the individual detectors (10), interpolates the two interpolation directions of the two maximum change amplitudes of different algebraic signs.

6. Rotary laser remote control system with a rotary laser (1) according to one of claims 1 to 5 and an associated remote control (3) having a transmitter (4) and a manually actuatable transmitting button (5) for activating the signal (6), **characterised in that** the signal (6) is of constant frequency and amplitude at least for the duration of a rotation period (T) of the rotation laser (1).

7. Rotary laser remote control system according to claim 6, **characterised in that** the transmitter (4) forms a radiating solid angle ([beta]) in the region of 10° to 30°.

8. Rotary laser remote control system according to claim 6 or 7, **characterised in that** the remote control is formed as an active beam catcher with a power source and a photo diode cell.

## Revendications

1. Laser rotatif comprenant au moins une unité de rayonnement laser (7) appropriée pour l'émission d'un rayonnement laser rotatif (2) autour d'un axe de rotation (A) dans un plan de faisceaux (E), unité qui renvoie par un moyen de renvoi de rayonnement laser (14) le rayonnement laser (2) dans le plan de faisceau (E), et comprenant un radar (I), qui peut être commandé par un moyen de calcul (9), rotatif balayant le plan de faisceau (E) dans un secteur angulaire ([phi]), qui peut être commuté en un radar de balayage (II) dans le plan de faisceau (E), ainsi qu'avec au moins un détecteur (10) sensible à l'amplitude, dans le plan de faisceau (E), qui est relié au moyen de calcul (9), plusieurs détecteurs (10) de ce type étant disposés autour de l'axe de rotation (A) et espacés de manière radiale, **caractérisé en ce que** l'unité de rayonnement laser (7) rotative forme conjointement avec le moyen de renvoi de rayonnement laser (14) au moins un moyen de renvoi (15) pour un signal (6) d'un émetteur (4), le moyen de renvoi (15) étant conçu convexe, perpendiculaire au plan de faisceau (E).

2. Laser rotatif selon la revendication 1 **caractérisé en ce que** le détecteur (10) est un détecteur infrarouge.

3. Laser rotatif selon les revendications 1 ou 2 **caractérisé en ce que** les détecteurs sensibles à l'amplitude (10) présentent chacun un filtre d'amplitude (11) qui détermine la courbe d'enveloppe d'amplitude d'un signal (6) de haute fréquence de manière usuelle.

4. Laser rotatif selon l'une des revendications de 1 à 3 **caractérisé en ce que** le moyen de calcul (9) effectue une interpolation d'amplitude maximale (12), qui effectue l'interpolation de l'amplitude maximale à partir des amplitudes discrètes détectées par les détecteurs individuels (10).

5. Laser rotatif selon l'une des revendications de 1 à 4 **caractérisé en ce que** le moyen de calcul (9) effectue une interpolation de la variation de l'amplitude maximale (13), qui effectue l'interpolation dans les deux directions d'interpolation des deux amplitudes de variation maximale à partir des amplitudes discrètes détectées par les détecteurs individuels (10).

6. Système de télécommande pour laser rotatif comprenant un laser rotatif (1) selon l'une des revendications de 1 à 5, et une télécommande (3) assignée, avec un émetteur (4) et une touche d'émission (5) pouvant être actionnée manuellement pour l'activation du signal (6), **caractérisé en ce que** le signal (6) présente au moins une fréquence constante et une amplitude pendant une période de rotation (T) du laser rotatif (1).

7. Système de télécommande pour laser rotatif selon la revendication 6 **caractérisé en ce que** l'émetteur (4) présente un espace angulaire de rayonnement ([bêta]) dans l'intervalle de 10° à 30 °.

8. Système de télécommande pour laser rotatif selon les revendications 6 ou 7 **caractérisé en ce que** la télécommande est conçue comme un capteur de rayonnement actif avec une source de courant et une cellule photodiode.
